# EUROPÄISCHE PATENTSCHRIFT

(11) **EP 0 836 875 B1**
(45) Veröffentlichungstag und Bekanntmachung des Hinweises auf die Patenterteilung: **14.01.2004**
(21) Anmeldenummer: 97113002.6
(22) Anmeldetag: 29.07.1997
(51) Int. Cl.: B01D 5/00, B01D 53/26, G01N 33/00

(54) **Kondensatabscheider**
Condensate separator
Dispositif de séparation de condensat

(30) Priorität: 01.08.1996 DE 19631001
(43) Veröffentlichungstag der Anmeldung: 22.04.1998
(73) Patentinhaber: Testo GmbH & Co., 79853 Lenzkirch (DE)
(72) Erfinder: Springmann, Thomas, 79102 Freiburg (DE)
(74) Vertreter: Patentanwälte Westphal, Mussgnug & Partner

(56) Entgegenhaltungen:
- DE-A- 3 830 647
- FR-A- 2 528 321
- US-A- 4 593 529

## Beschreibung

Die Erfindung betrifft einen Kondensatabscheider, insbesondere für eine transportable (Rauch-) Gasanalyseeinrichtung gemäß Oberbegriff des Anspruchs 1.

Zur Analyse des Rauchgases von Feuerungsanlagen und des Abgases von beispielsweise Gasmotoren wird Meßgas mittels einer Sonde angesaugt und einem Analysegerät zugeführt. Für die Gasanalyse ist es erforderlich, das Meßgas aufzubereiten, insbesondere müssen Rauch- und Schmutzpartikel sowie die Feuchtigkeit aus dem Meßgas entfernt werden.

Das Meßgas wird von der Sonde über einen Schlauch zu dem Analysegerät geleitet. Sofern sich Kondensat im Schlauch niederschlägt, kommt das durch den Schlauch hindurchgeleitete Meßgas über eine lange Zeit mit dem niedergeschlagenen Kondensat in Berührung. Hierbei werden Bestandteile, wie beispielsweise NO2 und SO2 gebunden, so dass es zu einer Verfälschung der Meßwerte kommt.

Um derartige Meßfehler zu vermeiden, ist es bekannt, zwischen der Entnahmesonde und dem Analysegerät einen beheizten Schlauch und einen gekühlten Kondensatabscheider einzuschalten. Der beheizte Schlauch sorgt dafür, dass das darin geführte Meßgas auf eine Temperatur oberhalb des Taupunkts erwärmt und gehalten wird, so dass auf dem Weg zum Analysegerät kein Kondensat abgeschieden werden kann. Die Kondensatabscheidung erfolgt ausschließlich und vollständig in einem kurzen Bereich des Gasströmungswegs, und zwar innerhalb des dem Schlauch nachgeschalteten gekühlten Kondensatabscheiders. Die Berührungsdauer des Meßgases mit dem flüssigen Kondensat beschränkt sich deshalb auf dem Bereich des Kondensatabscheiders selbst, so dass NO2 und SO2 nur in einem äußerst geringen, das Meßergebnis praktisch nicht verfälschenden Ausmaß gebunden werden. Die Konzentration an NO2 und SO2 im Meßgasstrom weicht damit auch nach.Durchlaufen des Kondensatabscheiders praktisch nicht von derjenigen des zu analysierenden Rauchgases ab.

Ein derartiger Kondensatabscheider ist beispielsweise aus der DE 42 29 177 C1 bekannt geworden vorn der die Erfindung ausgeht.

Es handelt sich um einen Kondensatabscheider, bei dem der vom Meßgas durchströmte Kondensatraum im Inneren eines Gehäuses gebildet und gegenüber der Umgebung abgedichtet ist. Das Meßgas wird dem Kondensatraum über ein Gaszuführungselement zugeführt, an dem der beheizbare Meßgasschlauch angeschlossen ist. Weiterhin ist ein Gasabführungselement enthalten, durch den das Meßgas nach dem Auskondensieren der Feuchtigkeit den Kondensatraum wieder verlässt. Zum Abkühlen des Meßgases ist ein Pelt.ier-Element vorgesehen, das bekanntermaßen eine Warmseite und eine Kaltseite aufweist. Das Peltier-Element ist am Gehäuse angebracht, wobei die Kaltseite mit dem Gehäuse wärmegekoppelt ist, so dass das Gehäuse, und damit die dem Kondensatraum zugewandte Innenwandung soweit abgekühlt wird, dass die im Kondensatraum herrschende Temperatur - und damit die Meßgastemperatur - unter den Taupunkt abgesenkt und gehalten werden kann.

Obwohl sich der vorstehend beschriebene Kondensatabscheider prinzipiell bewährt hat, weist er eine Reihe von Nachteilen auf. Probleme treten insbesondere beim mobilen Einsatz auf, d.h. im Zusammenhang mit transportablen Analyseeinrichtungen für Messungen vor Ort durch Heizungstechniker oder Schornsteinfeger. Der Grund dafür ist der vergleichsweise hohe Energiebedarf, um die für die Kondensatabscheidung erforderliche niedrige Temperatur aufrechtzuerhalten. Die Einsatzdauer der in der Regel durch Akkumulatoren gespeisten Analyseeinrichtungen ist demnach sehr begrenzt, so dass häufig Ersatzakkus mitgeführt werden müssen.

Die Ursache für den vergleichsweise schlechten Wirkungsgrad sind vielfältiger Natur. Insbesondere muß das den Kondensatraum umschließende Gehäuse als ganzes abgekühlt werden, wozu wegen der hohen Wärmekapazität des Gehäuses ein hoher Energiebedarf für den Abkühlvorgang von Nöten ist. Weiterhin treten hohe Energieverluste durch den Wärmeübergang an die Umgebung auf, die sich in nur sehr begrenztem Umfang durch einen das Gehäuse umgebenden Isoliermantel beheben lassen.

Der vorliegende Erfindung lag deshalb das Problem zugrunde, einen Kondensatabscheider, insbesondre für eine transportable (Rauch-) Gasanalyseeinrichtung, zur Verfügung zu stellen, der die genannten Nachteile nicht mehr aufweist. Insbesondere sollte er einen verbesserten Wirkungsgrad besitzen und gleichzeitig einen Absorbtion von Messgas im Kondensat möglichst gering halten, um das Messergebnis nicht zu verfälschen.

Gelöst wird dieses Problem mit einem Kondensatabscheider, der die Merkmale des Anspruchs 1 aufweist.

Vorteilhafte Ausführungsformen der Erfindung sind durch die Merkmale der Unteransprüche angegeben.

Die Erfindung geht davon aus, die Kaltseite des Peltier-Elements weitgehend vollständig in den Kondensatraum hineinzuverlegen, so dass diese unmittelbar in Kontakt mit dem Meßgas gebracht werden kann. Die als Wärmetauscherfläche dienende Oberfläche der Kaltseite des Peltier-Elements wird direkt vom Messgas umströmt, wodurch sich der Wirkungsgrad gegenüber den bisher bekannten Lösungen erheblich verbessert. Es sind praktisch keine Übertragungsverluste vorhanden, da die Kältequelle unmittelbar dort angebraucht ist, wo sie benötigt wird. Außerdem ist der Ort der tiefsten Temperatur im Inneren des Kondensatorabscheider, so dass die Temperaturdifferenz zwischen dem Gehäuse an der Außenseite und der Umgebung geringer ist als bei üblichen Kondensatabscheidern.

Die Kaltseite des Peltier-Elements ist im wärmeleitenden Kontakt mit dem Gehäuse, und zwar im Bereich einer Öffnung, durch die das Peltier-Element hindurchgeführt ist. Hierdurch wird ein Teil der Kühlleistung an das Gehäuse abgegeben, wodurch sich die wirksame Wärmetauscherfläche erheblich vergrößern lässt. So kann die Kondensatabscheidung nicht nur an der Kaltseite des Peltier-Elements selbst, sondern auch zusätzlich an der Innenwandung des Gehäuses erfolgen. Obwohl durch diese Maßnahme an sich die Temperaturdifferenz von dem Gehäuse zur Umgebung vergrößert wird, kann je nach geometrischer Konfiguration dennoch eine Verbesserung des Gesamtwirkungsgrades erzielt werden, da der Kondensatabscheider insgesamt kleiner ausgelegt werden kann.

Der hohe Wirkungsgrad des Kondensatabscheiders beruht im wesentlich darauf, dass das Messgas die Kältequelle umströmt und damit die zu.isolierende Außenfläche geringer ist als bei Konzepten, bei denen die Kältequelle außen angebracht ist und vom Messgas durchströmt werden muss. Die zu isolierende Außenfläche ist bei dem Kondensatabscheider nach der Erfindung deshalb erheblich reduziert.

Es ist vorgesehen, die Kaltseite des Peltier-Elements zylinderförmig auszugestalten. Beim Entlangströmen des Messgases bleibt dieses über eine verhältnismäßig lange Wegstrecke mit der Kältequelle in Kontakt, so dass ein Absinken der Messgastemperatur unterhalb des Taupunkts sichergestellt ist.

Eine weitere Vergrößerung der Kühlfläche wird auf einfache Art und Weise erreicht, wenn zusätzlich Vertiefungen, insbesondre in Form von axial durchgehenden Nuten vorgesehen sind. Durch eine Vielzahl, gleichmäßig am Umfang verteilter Längsnuten ergibt sich eine äußerst effektive und dennoch platzsparende Vergrößerung der Wärmeübergangsfläche.

Erfindungsgemäß ist ferner vorgesehen, dass das Gaszuführungselement ein mit einer Bohrung versehenes Zapfenelement aufweist und dass das Zapfenelement unter Bildung eines Axialspalts dicht an die Kaltseite herangeführt ist.

Optimal in diesem Zusammenhang ist die Ausgestaltung der dem zuführungsseitigen Zapfenelement zugewandten Stirnfläche als Prallfläche für das unmittelbar gegenüberliegend aus der Bohrung axial austretende Meßgas. Das Meßgas tritt mit hoher Geschwindigkeit aus dem Zapfenelement aus und gelangt infolge der hohen Austrittsgeschwindigkeit in intensiven Kontakt mit der Prallfläche, so dass bereits an dieser Stelle ein großer Teil an Flüssigkeit abgeschieden werden kann.

Eine weitere Verbesserung ergibt sich dann, wenn auch das Gasabführungselement ein Zapfenelement aufweist, welches unter Bildung eines Axialspalts dicht an die als Wärmetauscherelement gestaltete Kaltseite herangeführt ist. Dadurch werden zusätzlich Umlenkungen und Verwirbelungen erzeugt, die den Wärmeaustausch verbessern.

Bevorzugt ist die Kaltseite unter Bildung eines Radialspalts dicht an die Innenwandung des Kondensatraums herangeführt, so dass die axial durchgehenden Nuten eine Vielzahl gasführender Pfade bilden, die weitgehend voneinander getrennt und lediglich über den Radialspalt hinweg miteinander in Verbindung stehen. Der Meßgasstrom wird somit in eine Vielzahl von Teilströmen aufgeteilt, die durch verhältnismäßig enge Pfade hindurch geleitet werden und für eine effektive und gleichmäßige Abkühlung des gesamten Meßgasstroms sorgen.

Ein besonders einfacher konstruktiver Aufbau des Kondensatabscheiders lässt sich dann verwirklichen, wenn entsprechend einer bevorzugten Variante das Gehäuse aus einem zylindrischen Rohr besteht, das zur Bildung des Kondensatraums jeweils endseitig mit Stopfen dicht verschlossen ist. Die Stopfen tragen ihrerseits die Gasführungselemente, nämlich das Zuführungselement und das Abführungselement, die bevorzugt einstückig an dem jeweiligen Stopfen angeformt sind.

Bevorzugt tragen die Stopfen jeweils ein mit Bohrungen versehenes Zapfenelement, welches in den Kondensatraum hineinragt. Diese bewirken eine starke Verwirbelung des Meßgasstroms durch die sich hierdurch einstellenden Rückströmungszonen, die zusätzlich das Auskondensieren von Tröpfchen erleichtern.

Einer der beiden Stopfen, vorzugsweise der abführungsseitige Stopfen, trägt einen Filter zum Abscheiden von Partikeln. Besonders bewährt haben sich hierfür Feinpartikel aus PE. Sie werden in den Gasweg zwischen dem Zapfenelement und dem Gasführungselement eingeschaltet, wobei eine Anordnung im Inneren des Zapfenelements den zusätzlichen Vorteil aufweist, dass ein Kontakt mit Kondensat zuverlässig verhindert ist.

Für die Realisierung der zuletzt beschriebenen Varianten kann auf bewährte Bauteile zurückgegriffen werden, da diese dem Grunde nach für ungekühlte Kondensatabscheider, beispielsweise gemäß der DE 41 01 194 C1, im Einsatz sind.

Durch die vorstehend beschriebenen Maßnahmen lässt sich ein äußerst effektiv arbeitender Kondensatabscheider realisieren, der aufgrund seines hervorragenden Wirkungsgrades ein geringes Bauvolumen zulässt und mit einer vergleichsweise geringen Kühlleistung auskommt. Er eignet sich deshalb ganz besonders für den eingangs genannten Einsatz in tragbaren, mobilen Analyseeinrichtungen.

Eine weitere Verringerung der Kühlleistung und/oder eine Reduzierung des Bauvolumens läßt sich dann erzielen, wenn gemäß einer bevorzugten Variante der an dem Gaszuführungselement angeschlossene Meßgasschlauch zur Kühlung des Meßgases beiträgt, so daß das Meßgas bereits mit einer vergleichsweise niedrigen Temperatur in den Kondensatraum eintritt. Diese an sich bestechend einfach erscheinende Maßnahme wurde bislang jedoch nie ernsthaft in Erwägung gezogen, da diese der bisherigen Ansicht zuwiderlief, daß das Meßgas auf dem Weg von der Meßgassonde zum Kondensatabscheider beheizt werden muß, um einen Kondensatniederschlag mit der eingangs besprochenen Konsequenz einer Meßwertverfälschung zu verhindern. So hat es sich überraschend gezeigt, daß sich auch ohne Heizung ein Kondensatniederschlag dann vermeiden läßt, wenn durch einen ausreichend kleinen Durchmesser, vorzugsweise im Bereich zwischen 1,5 und 2,0 mm, eine so hohe Strömungsgeschwindigkeit im Meßgasschlauch erzielt wird, daß in Verbindung mit einer optimierten Gesamtlänge des Schlauchs, vorzugsweise im Bereich zwischen 2 und 4 Metern, die Verweildauer des Meßgases so gering ist, daß keine oder eine vernachlässigbar geringe Absorbtion beim Durchgang durch den Meßgasschlauch auftritt. Die Verwendung eines derartigen, unbeheizten Meßgasschlauchs reduziert bei gewöhnlich auftretenden Meßaufgaben die Temperatur auf die Umgebungstemperatur, so daß die erforderliche Kühlleistung im Kondensatabscheider weiter reduziert werden kann.

Da neben dem reduzierten Kühlbedarf auch keinerlei Energie für die bisher übliche Schlauchheizung benötigt wird, ist der Einsparungsefekt enorm. Dies macht sich insbesondere bei den eingangs beschriebenen, akkubetriebenen Analysegeräten positiv bemerkbar, da deren Betriebsdauer erheblich verlängert werden kann, ohne den Akku wechseln zu müssen.

Bevorzugt ist der Meßgasschlauch aus PTFE gefertigt, da dieses Material ausreichend resistent gegenüber den aggressiven Bestandteilen des Meßgases ist. Darüber hinaus hat dieses Material die Eigenschaft, daß Kondensattröpfchen an der Oberfläche praktisch nicht anhaften und somit vom Meßgasstrom mitgerissen werden. Hierdurch wird verhindert, daß Kondensat in nennenswerten Mengen im Meßgasschlauch verbleibt.

Ebenso gut eignen sich auch andere Materialien, sofern sie vergleichbare Eigenschaften besitzen, insbesondere hinsichtlich meßrelevanter Bestandteile eine geringe Absorbtion aufweisen.

Die Konfiguration mit dem unbeheizten Meßgasschlauch stellt damit an sich einen zweistufigen Gaskühler dar, wobei die erste Stufe durch den Meßgasschlauch gebildet ist und in der das Meßgas auf Umgebungstemperatur abgekühlt wird. Die zweite Stufe stellt der mit dem Peltier-Element versehene Kondensatraum dar, in welchem die Abkühlung auf eine Temperatur unterhalb des Taupunkts, der ca. 20 Grad Celsius unterhalb der Umgebungstemperatur liegt, erfolgt.

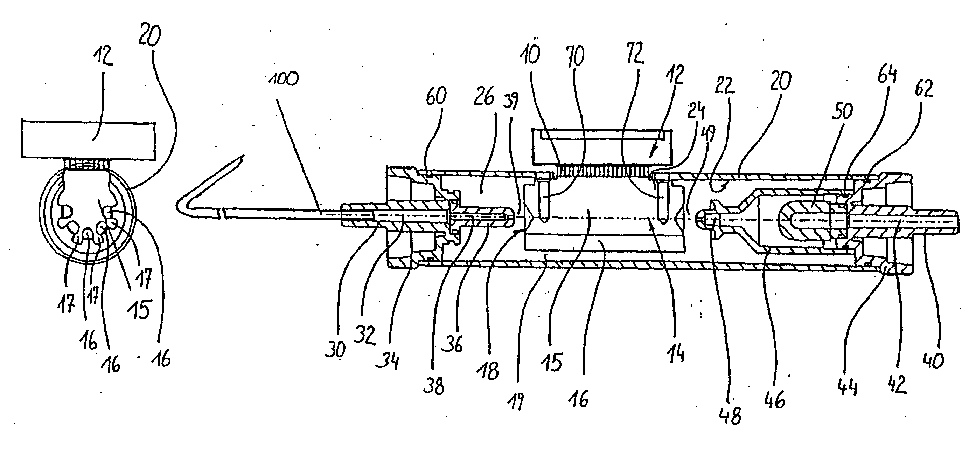

Die Erfindung wird nachstehend anhand des in der Figur dargestellten Ausführungsbeispiels erläutert.

Der Kondensatabscheider besitzt ein Gehäuse in Form eines Rohres 20, welches zur Bildung eines Kondensatraumes 26 jeweils endseitig gegenüberliegend mit Stopfen 34, 44 verschlossen ist. Zwischen den Stopfen 34, 44 und dem Rohr 20 sind Dichtungsringe 60, 62 vorgesehen, die einen dichten Abschluß zwischen den genannten Bauteilen sicherstellen.

Am Stopfen 34 ist ein rohrförmiges Gaszuführungselement 30 integral angeformt, welches vollständig von einer Bohrung 32 in axialer Richtung durchsetzt ist. Am Gaszuführungselement 30 ist ein Meßgasschlauch 100 angebracht, der die Verbindung zu einer hier nicht näher dargestellten Entnahmesonde herstellt.

Am Stopfen 44 ist ein rohrförmiges Gasabführungselement 40 angeformt, das von einer Bohrung 42 axial vollständig durchsetzt ist. Am Gasabführungselement 40 kann eine hier nicht dargestellte Leitung zum Anschluß an eine Analyseeinrichtung angebracht werden.

Das Rohr 20 ist mit einer Öffnung 24 versehen, durch die ein Peltier-Element 10 hindurchgeführt ist. Das Peltier-Element 10 besitzt in ansich bekannter Weise eine Warmseite 12, die außerhalb des Rohres 20 angeordnet ist und der Wärmeabführung dient.

Innerhalb des Rohres 20 ist die Kaltseite 14 angebracht, die sich somit praktsich vollständig innerhalb des Rohres 20 befindet und unmittelbar als Wärmetauscher konzipiert ist. Hierzu besitzt die Kältseite 14 einen zylindrischen Grundkörper 15, der mittels zweier Schrauben 70, 72 am Rohr 20 gehalten ist. In den Grundkörper 15 sind mehrere, in Axialrichtung durchgehende Nuten 16 eingeschnitten, wobei jeweils zwischen zwei benachbart verlaufenden Nuten 16 ein Steg 17 stehen bleibt. Der Durchmesser des Grundkörpers 15 ist so bemessen, daß radial zwischen den Stegen 17 und dem Rohr 20 bzw. dessen Innenwandung 22, ein Radialspalt 19 verbleibt.

Der Grundkörper 15 besitzt infolge der eingeschnittenen Nuten 16 eine große Oberfläche, die als Wärmetauscherfläche für das daran entlanggeführte Meßgas dient. Gleichzeitig werden durch die Nuten 16 einzelne gasführende Pfade gebildet, die im wesentlichen voneinander getrennt und lediglich über die dazwischenliegenden Stege 17 im Bereich des Radialspalts 19 untereinander Verbindung haben.

In der Figur lediglich angedeutet ist der wärmeleitende Kontakt zwischen dem Rohr 20 im Bereich der Öffnung 24 und dem Grundkörper 15, so daß auch das Rohr 20 in gewissem Umfang abgekühlt und dessen Innenwandung 22 als zusätzliche Wärmetauscherfläche zur Verfügung steht.

Zur Verbesserung der Kondensatabscheidung werden zusätzlich Strömungsumlenkungen erzeugt. Hierzu trägt der Stopfen 34 ein mit einer axialen Durchgangsbohrung 38 versehenes Zapfenelement 36, das konzentrisch zum Rohr 20 verläuft und unter Bildung eines Axialspalts 39 dicht an den Grundkörper 15 herangeführt ist. Das stirnseitig aus dem Zapfenelement 36 aus der Bohrung 38 austretende Meßgas prallt stirnseitig auf den Grundkörper 15 auf, dessen Stirnseite 18 somit als Prallfläche wirkt. Infolge des Aufpralls wird das Meßgas zunächst entgegen der Auftreffrichtung umgelenkt, bevor es nach einer erneuten Umlenkung am Grundkörper 15 entlang geführt wird.

Hinter dem Grundkörper 15 erfolgt erneut eine zweifache Umlenkung, da ein weiteres Zapfenelement 46 vorgesehen ist, das vom Stopfen 44 getragen ist. Es weist wiederum eine Bohrung 48 auf, die koaxial zum Rohr 20 verläuft. Das Zapfenelement 46 ist ebenfalls bis dicht an den Grundkörper 15 unter Bildung eines Axialspalts 49 herangeführt, so daß der Meßgasstrom durch diesen Axialspalt 49 hindurch in die Bohrung 48 eintreten kann. Die Bohrung 48 mündet im Inneren des Zapfenelements 46, das gegenüber dem Stopfen 46 mittels eines Dichtungsrings 64 abgedichtet ist und einen Filter 50 zur Abscheidung von Partikeln aufnimmt.

Als Kondensatraum 26 steht somit der nicht verbaute Innenraumanteil des Rohres 20 zur Verfügung.

Eine Besonderheit stellt der unbeheizte Meßgasschlauch 100 dar, der Gegenstand der am selben Tag eingereichten Patentanmeldung (tes201 "Verfahren zum Aufbeeiten eines Meßgasstroms") ist, auf die insoweit Bezug genommen wird.

Der Meßgasschlauch 100 besitzt einen Innendurchmesser von 3 mm und eine Länge von 3 Metern. Bei dem dargestellten Ausführungsbeispiel wird Meßgas mit einer Durchflußmenge von 0,9 Litern pro Minute abgesaugt, so daß die Verweilzeit des Meßgases weniger als 2 Sekunden beträgt. Die Verweilzeit stellt sicher, daß keine meßrelevante Absorbtion von beispielsweise NO2 oder SO2 stattfinden kann. Als Material wird PTFE verwendet, an dem Kondensat bei den geschilderten Strömungsbedingungen nicht in nennenswertem Umfang haften kann, sondern von der Strömung des Meßgases mitgerissen wird.

Bei einer Meßgastemperatur von ca. 180 bis 250 Grad Celsius im Bereich der nicht dargestellten Meßgassonde ergibt sich eine Temperatur am Ende der Meßgasleitung 100, d.h. im Bereich des Gaszuführungselements 30, in Höhe von ca. 20 Grad Celsius. Es gelingt somit eine Abkühlung auf Umgebungstemperatur.

Darüber hinaus wird bei der Inbetriebnahme sehr rasch die für die Messung erforderliche Ausgangsbedingung (Absenkung der Temperatur im Kondensatraum 26 auf einen Wert unterhalb der Taupunkttemperatur) erreicht. Es können demnach Meßwerte in sehr kurzer Zeit gewonnen werden.

### Bezugszeichenliste

- 10: Peltier-Element
- 12: Warmseite
- 14: Kaltseite
- 15: Grundkörper
- 16: Nut
- 17: Steg
- 18: Prallfläche
- 19: Radialspalt
- 20: Rohr
- 22: Innenwandung
- 24: Öffnung
- 26: Kondensatraum
- 30: Gaszuführungselement
- 32: Bohrung
- 34: Stopfen
- 36: Zapfenelement
- 38: Bohrung
- 39: Axialspalt
- 40: Gasabführungselement
- 42: Bohrung
- 44: Stopfen
- 46: Zapfenelement
- 48: Bohrung
- 49: Axialspalt
- 50: Filter
- 60: Dichtungsring
- 62: Dichtungsring
- 64: Dichtungsring
- 70: Schraube
- 72: Schraube
- 100: Meßgasschlauch

## Patentansprüche

1. Kondensätabscheider, insbesondere für eine transportable Rauchgas- oder Gasanalyseeinrichtung, mit
- einem Kondensatraum (26), der gegenüber der Umgebung abgedichtet im Inneren eines Gehäuses (20) gebildet ist und vom Meßgas durchströmt wird,
- einem Gaszuführungselement (30), das in dem Kondensatraum (26) hineingeführt ist,
- einem Gasabführungselement (40), das aus dem Kondensatraum (26) herausgeführt ist, und
- einem Peltier-Element (10), das eine Warmseite (12) und eine Kaltseite (14) aufweist, am Gehäuse (20) angebracht ist und zum Kühlen des den Kondensatraum (26) durchströmenden Meßgases dient, wobei die Kaltseite (14) eine zylindrische Grundform (15) besitzt und weitgehend vollständig durch eine Öffnung (24) des Gehäuses (20) in den Kondensatraum (26) hineingeführt ist, so dass sie unmittelbar im Kontakt mit dem Meßgaß ist,
**dadurch gekennzeichnet,**
**dass** die zylindrische Grundform (15) der Kaltseite (14)
mit Vertiefungen in Form von axial durchgehenden Nuten (16) versehen ist und eine Stirnfläche (18) aufweist,
- **dass** das Gaszuführungselement (30) ein mit einer Bohrung (38) versehenes Zapfenelement (36) aufweist, und
- **dass** das Zapfenelement (36) unter Bildung eines Axialspalts (39) dicht an die Stirnfläche (18) der Kaltseite (14) herangeführt ist, wobei die Stirnfläche (18) der Kaltseite (14) als Prallfläche für das aus der Bohrung (38) austretende Messgas wirkt.

2. Kondensatabschneider nach Anspruch 1,
**dadurch gekennzeichnet, dass** das Gasabführungselement (40) ein mit einer Bohrung (48) versehenes Zapfenelement (46) aufweist, und dass das Zapfenelement (46) unter Bildung eines Axialspalts (49) dicht an die Kaltseite (14) herangeführt ist.

3. Kondensatabscheider nach Anspruch 1 oder 2, **dadurch gekennzeichnet, dass** die Kaltseite (14) unter Bildung eines Radialspalts (19) dicht an die Innenwandung des Kondensatraums (26) heranreicht, so dass durch die Nuten (16) mehrere gasführende Pfade gebildet sind, die lediglich über den Radialspalt (19) miteinander in Verbindung stehen.

4. Kondensatabscheider nach Anspruch 1, 2 oder 3, **dadurch gekennzeichnet, dass** das Gehäuse aus einem zylindrischen Rohr (20) besteht, das zur Bildung des Kondensatraums (26) jeweils endseitig mit Stopfen (34, 44) dicht verschlossen ist, welche ihrerseits das Gaszuführungselement (30) und das Gasabführungselement (40), vorzugsweise einstückig, aufnehmen.

5. Kondensatabscheider nach Anspruch 4, **dadurch gekennzeichnet, dass** die Stopfen (34, 44) die Zapfenelemente (36, 46) tragen.

6. Kondensatabscheider nach Anspruch 5, **dadurch gekennzeichnet, dass** zumindest einer der beiden Stopfen (33, 44) einen Filter, vorzugsweise einen Feinpartikelfilter (50) aus PE, trägt, der in den Gasweg zwischen einem Zapfenelement (36, 46) und dem Gaszuführungselement (30) oder dem Gasabführungselement (40) eingeschaltet ist.

7. Kondensatabscheider nach einem der Ansprüche 1 bis 6, **dadurch gekennzeichnet, dass** das Gehäuse (20) im Bereich der Öffnung (24), durch die das Peltier-Element (10) hindurchgeführt ist, im wärmeleitenden Kontakt mit der Kaltseite (14) ist.

8. Kondensatabscheider nach einem der Ansprüche 1 bis 7, **gekennzeichnet durch** einen unbeheizten Meßgasschlauch (100), der
- einen geringen Durchmesser, vorzugsweise zwischen 1,5 und 2,0 mm aufweist,
- eine große Länge, vorzugsweise zwischen 2 und 4 Meter besitzt, und
- am Gaszuführungselement (30) angeschlossen ist.

9. Kondensatabscheider nach Anspruch 8, **dadurch gekennzeichnet, dass** der Meßgasschlauch (100) aus PTFE besteht.

## Claims

1. A condensate separator, in particular for a portable flue gas or gas analysis device, having
- a condensate chamber (26), which is sealed off from the environment and is formed in the interior of a housing (20) and through which the test gas flows,
- a gas supply element (30), which is passed into the condensate chamber (26),
- a gas discharge element (40), which is passed out of the condensate chamber (26), and
- a Peltier element (10), which has a warm side (12) and a cold side (14), is mounted on the housing (20) and serves to cool the test gas flowing through the condensate chamber (26), the cold side (14) having a cylindrical basic shape (15) and being passed largely completely through an aperture (24) of the housing (20) into the condensate chamber (26) so that it is in direct contact with the test gas,
**characterised in that** the cylindrical basic shape (15) of the cold side (14) is provided with depressions in the form of axially continuous grooves (16) and has an end face (18),
- **in that** the gas supply element (30) comprises a tap element (36) provided with a bore (38), and
- **in that** the tap element (36) is brought closely up to the end face (18) of the cold side (14) with the formation of an axial gap (39), the end face (18) acting as an impact surface for the test gas that emerges from the bore (38).

2. A condensate separator according to Claim 1,
**characterised in that** the gas discharge element (40) comprises a tap element (46) provided with a bore (48),
**and in that** the tap element (46) is brought closely up to the cold side (14) with the formation of an axial gap (49).

3. A condensate separator according to Claim 1 or 2,
**characterised in that** the cold side (14) approaches closely to the internal wall of the condensate chamber (26) with the formation of a radial gap (19) so that several gas-conducting paths, which only communicate with one another via the radial gap (19), are formed by the grooves (16).

4. A condensate separator according to Claim 1, 2 or 3,
**characterised in that** the housing consists of a cylindrical pipe (20), which is tightly sealed with plugs (34, 44) at the respective ends to form the condensate chamber (26), which plugs in turn house the gas supply element (30) and the gas discharge element (40), preferably in one piece.

5. A condensate separator according to Claim 4,
**characterised in that** the plugs (34, 44) support the tap elements (36 46).

6. A condensate separator according to Claim 5,
**characterised in that** at least one of the two plugs (33, 44) supports a filter, preferably a fine particle filter (50) made from PE, which is connected into the gas path between one tap element (36, 46) and the gas supply element (30) or the gas discharge element (40).

7. A condensate separator according to one of Claims 1 to 6,
**characterised in that** the housing (20) is in heat-conductive contact with the cold side (14) in the vicinity of the aperture (24) through which the Peltier element (10) is passed.

8. A condensate separator according to one of Claims 1 to 7,
**characterised by** an unheated test gas tube (100) which
- comprises a small diameter, preferably between 1.5 and 2.0 mm,
- has a great length, preferably between 2 and 4 metres, and
- is connected to the gas supply element (30).

9. A condensate separator according to Claim 8,
**characterised in that** the test gas tube (100) is made from PTFE.

## Revendications

1. Séparateur de condensats, en particulier pour un dispositif transportable d'analyse des gaz de fumée ou des gaz, comportant :
- une chambre de condensat (26), formée à l'intérieur d'un boîtier (20) de façon à être isolée par rapport à l'environnement et traversée par le gaz mesuré,
- un élément d'entrée du gaz (30) introduit dans la chambre de condensat (26),
- un élément de sortie du gaz (40) sortant de la chambre de condensat (26), et
- un élément Peltier (10), qui présente un côté chaud (12) et un côté froid (14), qui est monté au niveau du boîtier (20) et qui permet de refroidir le gaz mesuré traversant la chambre de condensat (26), le côté froid (14) ayant une forme de base cylindrique (15) et étant pour l'essentiel complètement inséré dans la chambre de condensat (26) par le biais d'une ouverture (24) du boîtier (20), de telle sorte qu'il est directement en contact avec le gaz mesuré,
**caractérisé en ce que**
- la forme de base cylindrique (15) du côté froid (14) est pourvue de renfoncements en forme de rainures (16) axiales ininterrompues et présente une face frontale (18),
- l'élément d'entrée du gaz (30) présente un tenon (36) pourvu d'un perçage (38), et
- le tenon (36) est appliqué contre la face frontale (18) située du côté froid (14) par la formation d'une fente axiale (39), la face frontale (18) située du côté froid (14) agissant en tant que surface de contact pour le gaz mesuré sortant du perçage (38).

2. Séparateur de condensats selon la revendication 1,
**caractérisé en ce que**
l'élément de sortie du gaz (40) présente un tenon (46) pourvu d'un perçage (48), et le tenon (46) est appliqué contre le côté froid (14) par la formation d'une fente axiale (49).

3. Séparateur de condensats selon la revendication 1 ou 2,
**caractérisé en ce que**
le côté froid (14) parvient contre la paroi intérieure de la chambre de condensat (26) par la formation d'une fente radiale (19), de telle sorte que par le biais des rainures (16) sont formées plusieurs voies de conduction du gaz, qui sont reliées entre elles uniquement par le biais de la fente radiale (19).

4. Séparateur de condensats selon la revendication 1, 2 ou 3,
**caractérisé en ce que**
le boîtier se compose d'un tube (20) cylindrique, qui est hermétiquement fermé par des bouchons (34, 44) du côté de ses extrémités respectives afin de permettre la formation de la chambre de condensat (26), les bouchons incluant quant à eux l'élément d'entrée du gaz (30) et l'élément de sortie du gaz (40), de préférence en une seule pièce.

5. Séparateur de condensats selon la revendication 4,
**caractérisé en ce que**
les bouchons (33, 44) comportent les tenons (36, 46).

6. Séparateur de condensats selon la revendication 5,
**caractérisé en ce qu'**
au moins l'un des deux bouchons (33, 44) comporte un filtre, de préférence un filtre à particules fines (50) en polyéthylène, qui intervient sur le trajet du gaz entre un tenon (36, 46) et l'élément d'entrée du gaz (30) ou l'élément de sortie du gaz (40).

7. Séparateur de condensats selon l'une des revendications 1 à 6,
**caractérisé en ce que**
dans la zone de l'ouverture (24) par laquelle est introduit l'élément Peltier (10), le boîtier (20) se trouve en contact conducteur de chaleur avec le côté froid (14).

8. Séparateur de condensats selon l'une des revendications 1 à 7,
**caractérisé par**
un tuyau de gaz mesuré (100) non chauffé, qui
- présente un diamètre faible, de préférence compris entre 1,5 et 2,0 mm,
- possède une longueur importante, de préférence comprise entre 2 et 4 mètres, et
- est fixé à l'élément d'entrée du gaz (30).

9. Séparateur de condensats selon la revendication 8,
**caractérisé en ce que**
le tuyau de gaz mesuré (100) se compose de PTFE.
